# EUROPÄISCHE PATENTANMELDUNG

(11) **EP 1 802 092 A1**
(43) Veröffentlichungstag der Anmeldung: **27.06.2007**
(21) Anmeldenummer: 05090358.2
(22) Anmeldetag: 22.12.2005
(51) Int. Cl.: H04M 15/16

(54) **Verfahren zum Anzeigen von Gebühren auf einem mobilen Endgerät eines Mobilfunknetzes und entsprechendes mobiles Endgerät**

(71) Anmelder: SIEMENS AKTIENGESELLSCHAFT, 80333 München (DE)
(72) Erfinder: Kühne, Ralph, 71679 Asperg (DE); Schläger, Morten, 14050 Berlin (DE)

(57) **Zusammenfassung**

Erfindungsgemäß wird ein flexibles und leistungsfähiges Verfahren zum Anzeigen von Gebühren auf einem mobilen Endgerät (MS) eines Mobilfunknetzes angegeben mit den folgenden Schritten:
- Auswählen mindestens einer für die Berechnung der Gebühren eines von dem mobilen Endgerät (MS) angeforderten Dienstes zu verwendenden Berechnungsroutine durch eine Gebührenanzeigesteuerungseinrichtung (GST) des Mobilfunknetzes,
- Übertragen (3) von für die mindestens eine ausgewählte Berechnungsroutine benötigten Vergebührungsparametern von der Gebührenanzeigesteuerungseinrichtung (GST) an das mobile Endgerät (MS),
- Ermitteln von für die Vergebührung des Dienstes relevanten Messgrößen durch das mobile Endgerät (MS),
- Berechnen der Gebühren durch das mobile Endgerät (MS) unter Verwendung der mindestens einen ausgewählten Berechnungsroutine, der Vergebührungsparameter und der Messgrößen und
- Anzeigen der berechneten Gebühren auf dem mobilen Endgerät (MS).

Darüber hinaus betrifft die Erfindung ein mobiles Endgerät (MS) in einem Mobilfunknetz zum Anzeigen von Gebühren eines Dienstes.

## Beschreibung

Verfahren zum Anzeigen von Gebühren auf einem mobilen Endgerät eines Mobilfunknetzes und mobiles Endgerät in einem Mobilfunknetz zum Anzeigen von Gebühren eines Dienstes

Die Erfindung betrifft ein Verfahren zum Anzeigen von Gebühren auf einem mobilen Endgerät eines Mobilfunknetzes.

Zukünftige Mobilfunkgenerationen werden eine noch größere Vielfalt in Bezug auf Zugangstechnologien, Diensten und Gebührenmodellen aufweisen. Dabei geht der Trend im Bereich Vergebührung insbesondere dahin, dass unterschiedliche Kosten in Abhängigkeit des Dienstes (so genanntes "Flow Based Charging") oder des Inhaltes (so genanntes "Content Based Charging") erhoben werden. Mit der zunehmenden Komplexität der Gebührenmodelle entsteht das Problem, dem Nutzer eines mobilen Endgerätes eine Übersicht über die anfallenden Kosten zu verschaffen.

Aus dem Dokument 3GPP TS 22.024 V6.1.0 (2005-06); 3rd Generation Partnership Project; Technical Specification Group Services and System Aspects; Description of Charge Advice Information (CAI) (Release 6) ist ein als "Advice of Charge (AoC)" bezeichneter Dienst bekannt, mittels dessen eine Anzeige der Kosten eines Rufes auf einem mobilen Endgerät ermöglicht wird. Zu diesem Zweck wird durch das mobile Endgerät die Gebühr des Rufes in heimischer Währung berechnet. Bei den berechneten Gebühren handelt es sich um eine Schätzung der tatsächlichen Gebühren in Echtzeit, die durch einen so genannten "Supplementary Service" des Kernnetzes ermöglicht wird. Die Gebühren werden dabei durch das mobile Endgerät anhand so genannter e-Parameter nach einer vorbestimmten Formel berechnet. Entsprechend dem 3GPP-Standard werden dabei insgesamt maximal 7 e-Parameter verwendet. Komplexere Vergebührungsmodelle, bei denen beispielsweise sowohl Kosten für die übertragene Datenmenge als auch für den übertragenen Inhalt, wie beispielsweise eine Musikdatei, anfallen, werden durch das standardisierte Verfahren nicht abgedeckt. Dies bedeutet, dass in diesen Fällen eine korrekte, d. h. alle Gebührenbeiträge berücksichtigende, Anzeige der anfallenden Gebühren auf dem mobilen Endgerät nicht möglich ist.

Der vorliegenden Erfindung liegt die Aufgabe zugrunde, ein flexibles und leistungsfähiges Verfahren zum Anzeigen von Gebühren auf einem mobilen Endgerät eines Mobilfunknetzes anzugeben.

Diese Aufgabe wird erfindungsgemäß gelöst durch ein Verfahren zum Anzeigen von Gebühren auf einem mobilen Endgerät eines Mobilfunknetzes mit den folgenden Schritten: Auswählen mindestens einer für die Berechnung der Gebühren eines von dem mobilen Endgerät angeforderten Dienstes zu verwendenden Berechnungsroutine durch eine Gebührenanzeigesteuerungseinrichtung des Mobilfunknetzes, Übertragen von für die mindestens eine ausgewählte Berechnungsroutine benötigten Vergebührungsparametern von der Gebührenanzeigesteuerungseinrichtung an das mobile Endgerät, Ermitteln von für die Vergebührung des Dienstes relevanten Messgrößen durch das mobile Endgerät, Berechnen der Gebühren durch das mobile Endgerät unter Verwendung der mindestens einen ausgewählten Berechnungsroutine, der Vergebührungsparameter und der Messgrößen und Anzeigen der berechneten Gebühren auf dem mobilen Endgerät.

Bei dem mobilen Endgerät kann es sich beispielsweise um ein Mobilfunktelefon, einen mobilen Computer ("Notebook") oder auch einen so genannten PDA (Personal Digital Assistant) mit einer Funkschnittstelle handeln. Als Mobilfunknetz kann dabei ein solches nach einem beliebigen Standard zur Anwendung kommen, wie beispielsweise ein Mobilfunknetz entsprechend dem GSM (Global System for Mobile Communication)-, dem GPRS (General Packet Radio Service)-, dem UMTS (Universal Mobile Telecommunication System)-, dem CDMA (Code Division Multiple Access)-, dem DECT (Digital Enhanced Cordless Telecommunications)-, dem Bluetooth- oder auch dem WLAN (Wireless Local Area Network)-Standard.

Es sei darauf hingewiesen, dass es sich bei der Gebührenanzeigesteuerungseinrichtung im Wesentlichen um eine logische Komponente handelt. Dies bedeutet, dass diese Einrichtung durch ihre Funktion definiert ist und nicht notwendigerweise in Form separater Hardware wie beispielsweise eines speziellen Netzknotens oder eines separaten elektronischen Logikbausteins realisiert sein muss. Stattdessen kann die entsprechende Funktion der Gebührenanzeigesteuerungseinrichtung beispielsweise als zusätzliche Funktion eines vorhandenen Netzknotens des Mobilfunknetzes implementiert oder beispielsweise auch über mehrere Netzknoten verteilt werden.

Das erfindungsgemäße Verfahren ist bevorzugt, da es eine dienstspezifische Auswahl der für die Berechnung der Gebühren des von dem mobilen Endgerät angeforderten Dienstes zu verwendenden Berechnungsroutine bzw. Berechnungsroutinen durch die Gebührenanzeigesteuerungseinrichtung des Mobilfunknetzes ermöglicht. Somit kann für den angeforderten Dienst jeweils spezifisch festgelegt werden, mittels welcher Berechnungsroutine die Berechnung der Gebühren erfolgen soll. Dabei ist auch eine Kombination mehrerer Berechnungsroutinen möglich. Des Weiteren werden vorteilhafterweise für die mindestens eine ausgewählte Berechnungsroutine benötigte Vergebührungsparameter von der Gebührenanzeigesteuerungseinrichtung an das mobile Endgerät übertragen. Bei den übertragenen Vergebührungsparametern handelt es sich somit um solche, die auf die Verwendung mit der mindestens einen ausgewählten Berechnungsroutine etwa hinsichtlich ihrer Anzahl und ihrer Werte abgestimmt sind.

Das erfindungsgemäße Verfahren bietet weiterhin den Vorteil, dass das Ermitteln von für die Vergebührung des Dienstes relevanten Messgrößen durch das mobile Endgerät erfolgt. Dies bedeutet, dass das mobile Endgerät Messgrößen, wie beispielsweise das empfangene und/oder das gesendete Datenvolumen, die Gesprächsdauer, die Anzahl der auf das mobile Endgerät herunter geladenen Dateien oder auch die Anzahl von "Clicks" in einer Applikation selbst ermittelt. Ein Erfassen dieser Messgrößen durch das Mobilfunknetz und insbesondere eine anschließende Übertragung der erfassten Messgrößen an das mobile Endgerät ist somit vorteilhafterweise nicht erforderlich.

Die Berechnung der Gebühren erfolgt durch das mobile Endgerät unter Verwendung der mindestens einen Berechnungsroutine, der Vergebührungsparameter und der Messgrößen. Damit ist das mobile Endgerät im Verlauf einer Dienstnutzung vorteilhafterweise in der Lage, eine weitestgehend autonome, d. h. von dem Mobilfunknetz unabhängige, Anzeige der berechneten Gebühren auf dem mobilen Endgerät vorzunehmen. Bei den zur Berechnung der Gebühren verwendeten Berechnungsroutinen handelt es sich vorzugsweise um einfache Software-Komponenten, die zur Berechnung der Gebühren im Falle komplexerer Vergebührungsszenarien auf einfache Art und Weise kombiniert werden können.

Das erfindungemäße Verfahren kann vorzugsweise durch Übertragen der ausgewählten Berechnungsroutine oder mindestens einer der ausgewählten Berechnungsroutinen von der Gebührenanzeigesteuerungseinrichtung an das mobile Endgerät ausgestaltet sein. Diese Ausführungsform des erfindungsgemäßen Verfahrens ist vorteilhaft, da sie eine flexible Anpassung und Aktualisierung der für die Berechnung der Gebühren auf dem mobilen Endgerät verwendeten Berechnungsroutinen an neue Anforderungen ermöglicht. So ist es nicht erforderlich, dass das mobile Endgerät bereits bei der ersten Inbetriebnahme alle im Laufe der späteren Nutzung für einen spezifischen Dienst benötigten Berechnungsroutinen gespeichert hat. Stattdessen kann vorzugsweise eine Übertragung der durch die Gebührenanzeigesteuerungseinrichtung des Mobilfunknetzes ausgewählten Berechnungsroutine oder mindestens einer der ausgewählten Berechnungsroutinen von der Gebührenanzeigesteuerungseinrichtung an das mobile Endgerät erfolgen. Vorteilhafterweise speichert das mobile Endgerät dabei die empfangene Berechnungsroutine bzw. die empfangenen Berechnungsroutinen, so dass sie sowohl für die Berechnung der Gebühren des aktuell angeforderten Dienstens als auch für die Berechnung der Gebühren von zukünftig angeforderten Diensten zur Verfügung steht bzw. stehen.

Vorzugsweise kann das erfindungsgemäße Verfahren auch so ablaufen, dass das Übertragen unmittelbar in Antwort auf das Anfordern des Dienstes erfolgt. Dies ist vorteilhaft, da durch die unmittelbare Übertragung der ausgewählten Berechnungsroutine bzw. mindestens einer der ausgewählten Berechnungsroutinen von der Gebührenanzeigesteuerungseinrichtung an das mobile Endgerät ein zusätzlicher Informationsaustausch zwischen dem mobilen Endgerät und der Gebührenanzeigesteuerungseinrichtung zur Festlegung, welche Berechnungsroutine bzw. Berechnungsroutinen an das mobile Endgerät zu übertragen ist bzw. sind, entfallen kann.

In einer weiteren bevorzugten Ausführungsform des erfindungsgemäßen Verfahrens prüft die Gebührenanzeigesteuerungseinrichtung anhand eines endgeräte- bzw. nutzerspezifischen Datenbankeintrages die Verfügbarkeit der mindestens einen ausgewählten Berechnungsroutine auf dem mobilen Endgerät und von der Gebührenanzeigesteuerungseinrichtung wird mindestens eine auf dem mobilen Endgerät nicht verfügbare ausgewählte Berechnungsroutine an das mobile Endgerät übertragen. Dies bietet den Vorteil, dass ausschließlich für auf dem mobilen Endgerät nicht verfügbare ausgewählte Berechnungsroutinen eine Übertragung von der Gebührenanzeigesteuerungseinrichtung an das mobile Endgerät erfolgt. Vorteilhafterweise wird hierdurch die von der Gebührenanzeigesteuerungseinrichtung an das mobile Endgerät übertragene Datenmenge reduziert. Dabei überprüft die Gebührenanzeigesteuerungseinrichtung anhand des endgeräte- bzw. nutzerspezifischen Datenbankeintrages, ob die jeweiligen ausgewählte Berechnungsroutine bereits auf dem mobilen Endgerät verfügbar ist. Die entsprechende Information ist dabei in einer Datenbank abgelegt, welche Bestandteil der Gebührenanzeigesteuerungseinrichtung sein kann, oder aber beispielsweise über eine Schnittstelle an die Gebührenanzeigesteuerungseinrichtung angebunden sein kann. Vorzugsweise kann die Datenbank auch an einen weiteren Netzknoten des Mobilfunknetzes angebunden sein, in welchem Fall die Gebührenanzeigesteuerungseinrichtung eine Anfrage bezüglich der Verfügbarkeit der mindestens einen ausgewählten Berechnungsroutine auf dem mobilen Endgerät an den weiteren Netzknoten sendet. Die Datenbank kann vorteilhafterweise endgerätespezifisch und/oder nutzerspezifische Einträge enthalten. Während durch einen endgerätespezifischen Datenbankeintrag für ein bestimmtes mobiles Endgerät bzw. alle mobilen Endgeräte eines bestimmten Typs die verfügbaren Berechnungsroutinen angeben werden können, können mit einem nutzerspezifischen Datenbankeintrag die für einen bestimmten Nutzer des Mobilfunknetzes verfügbaren Berechnungsroutinen angegeben werden. Dies ist vorzugsweise insbesondere dann vorteilhaft, wenn die auf dem mobilen Endgerät verfügbaren Berechnungsroutinen auf einer lösbar mit dem übrigen mobilen Endgerät verbundenen Chip-Karte, wie beispielsweise einer so genannten SIM (Subscriber Identity Module)-Karte, gespeichert sind. In diesem Fall stehen vorteilhafterweise auch bei der Verwendung der Chip-Karte mit einem anderen mobilen Endgerät die betreffenden Berechnungsroutinen zur Verfügung.

Das erfindungsgemäße Verfahren kann auch derart ausgeführt sein, dass die mindestens eine ausgewählte Berechnungsroutine identifizierende Informationen von der Gebührenanzeigesteuerungseinrichtung an das mobile Endgerät gesendet werden, die Verfügbarkeit der mindestens einen ausgewählten Berechnungsroutine auf dem mobilen Endgerät durch das mobile Endgerät anhand der empfangenen Informationen geprüft wird, mindestens eine auf dem mobilen Endgerät nicht verfügbare ausgewählte Berechnungsroutine von der Gebührenanzeigesteuerungseinrichtung durch das mobile Endgerät angefordert wird und die mindestens eine auf dem mobilen Endgerät nicht verfügbare ausgewählte Berechnungsroutine von der Gebührenanzeigesteuerungseinrichtung an das mobile Endgerät übertragen wird. Diese Ausführungsform des erfindungsgemäßen Verfahrens ist vorteilhaft, da sie sowohl die überflüssige Übertragung von bereits auf dem mobilen Endgerät verfügbaren Berechnungsroutinen als auch die Notwendigkeit der Verwendung einer netzseitigen Datenbank mit endgeräte- bzw. nutzerspezifischen Datenbankeinträgen vermeidet.

Vorzugsweise läuft das erfindungsgemäße Verfahren derart ab, dass ein die auf dem mobilen Endgerät verfügbaren Berechnungsroutinen kennzeichnender Konfigurationscode von dem mobilen Endgerät an die Gebührenanzeigesteuerungseinrichtung übertragen wird und mindestens eine auf dem mobilen Endgerät nicht verfügbare ausgewählte Berechnungsroutine von der Gebührenanzeigesteuerungseinrichtung an das mobile Endgerät übertragen wird. Diese Ausführungsform ist bevorzugt, da sie es ermöglicht, dass nur solche Berechnungsroutinen von der Gebührenanzeigesteuerungseinrichtung an das mobile Endgerät übertragen werden, welche auf dem mobilen Endgerät noch nicht verfügbar sind. Eine Verwaltung entsprechender endgeräte- bzw. nutzerspezifischer Datenbankeinträge auf Seiten des Mobilfunknetzes ist hierbei nicht erforderlich. Vorzugsweise erfolgt die Übertragung des Konfigurationscodes beim Anfordern des Dienstes, so dass eine zusätzliche Signalisierungsnachricht vermieden wird.

Vorzugsweise kann das erfindungsgemäße Verfahren auch so ausgestaltet sein, dass die von dem mobilen Endgerät berechneten Gebühren mit von einer Vergebührungseinrichtung des Mobilfunknetzes berechneten Gebühren in vorbestimmten zeitlichen Abständen oder beim Eintreten vorbestimmter Ereignisse abgeglichen werden. Dies ist vorteilhaft, da hierdurch eine Synchronisierung der von dem mobilen Endgerät berechneten Gebühren mit den von der Vergebührungseinrichtung des Mobilfunknetzes berechneten Gebühren erfolgen kann. Dies ermöglicht es, eventuelle Ungenauigkeiten oder Fehler bei der Berechnung der Gebühren auf dem mobilen Endgerät zu erkennen und eine entsprechende Korrektur der angezeigten Gebühren vorzunehmen.

Das erfindungsgemäße Verfahren läuft vorzugsweise so ab, dass das Abgleichen durch Übertragen der von der Vergebührungseinrichtung berechneten Gebühren an das mobile Endgerät erfolgt. Dies bietet den Vorteil, dass der Abgleich der Gebühren unmittelbar auf dem mobilen Endgerät erfolgen kann und das Ergebnis bei der Anzeige der Gebühren berücksichtigt werden kann. Vorzugsweise erfolgt die Übertragung der Gebühren an das mobile Endgerät von der Vergebührungseinrichtung oder von der Gebührenanzeigesteuerungseinrichtung.

Vorzugsweise ist das erfindungsgemäße Verfahren so ausgestaltet, dass die für die Berechnung der Gebühren benötigten Berechnungsroutinen in einer an die Gebührenanzeigesteuerungseinrichtung angebundenen Speichereinrichtung vorgehalten werden. Diese Ausführungsform des erfindungsgemäßen Verfahrens ist vorteilhaft, da sie der Gebührenanzeigesteuerungseinrichtung einen einfachen und schnellen Zugriff auf die für die Berechnung der Gebühren benötigen Berechnungsroutinen ermöglicht.

Vorzugsweise kann das erfindungsgemäße Verfahren auch derart ausgeprägt sein, dass das Anzeigen der Gebühren betreffende Konfigurationsinformationen in einer an das mobile Endgerät angebundenen Speichereinrichtung gespeichert werden und die Konfigurationsinformationen beim Anzeigen der Gebühren berücksichtigt werden. Mittels der Konfigurationsinformationen kann dabei vorteilhafterweise festgelegt werden, in welcher Form die Anzeige der Gebühren auf dem mobilen Endgerät erfolgen soll. So können beispielsweise die Gebühren für einen bestimmten Dienst zeitlich aufsummiert werden, oder aber die Gebühren für mehrere gleichzeitig von dem mobilen Endgerät genutzte Dienste können in zusammengefasster Form angezeigt werden. Des Weiteren kann mittels der Konfigurationsinformationen vorzugsweise festgelegt werden, ob überhaupt und gegebenenfalls wie häufig eine Gebührenanzeige erfolgen soll. So sind beispielsweise Aktualisierungen der Gebührenanzeige in vorbestimmten regelmäßigen zeitlichen Abständen, beim Auflaufen vorbestimmter Kosten oder auch nur nach Beendigung einer Dienstnutzung möglich.

In einer weiteren bevorzugten Ausführungsform läuft das erfindungsgemäße Verfahren so ab, dass das Anzeigen der Gebühren betreffende Konfigurationsinformationen in einer an die Gebührenanzeigesteuerungseinrichtung angebundenen Speichereinrichtung gespeichert werden, die Konfigurationsinformationen an das mobile Endgerät übertragen und beim Anzeigen der Gebühren berücksichtigt werden. Diese Ausführungsform des erfindungsgemäßen Verfahrens bietet den Vorteil, dass der Netzbetreiber des Mobilfunknetzes netzseitig mittels der Konfigurationsinformationen festlegen kann, ob und in welcher Form bestimmten mobilen Endgeräten bzw. deren Nutzern die Möglichkeit der Anzeige der Gebühren auf dem mobilen Endgerät gegeben wird. Dabei kann vorzugsweise festgelegt werden, wie häufig die Anzeige der Gebühren erfolgen soll und welchen Nutzern mit welchem Detaillierungsgrad Kostentransparenz gewährt wird.

Das erfindungsgemäße Verfahren ist vorzugsweise so ausgestaltet, dass für das mobile Endgerät und/oder den Nutzer des mobilen Endgerätes und/oder den angeforderten Dienst spezifische Konfigurationsinformationen verwendet werden. Dies ist vorteilhaft, da somit eine hohe Flexibilität bezüglich der Anzeige der Gebühren ermöglicht wird.

In einer weiteren bevorzugten Ausführungsform läuft das erfindungsgemäße Verfahren so ab, dass die bei einer Nutzung des Dienstes voraussichtlich anfallenden Gebühren auf dem mobilen Endgerät vor der Nutzung des Dienstes berechnet und angezeigt werden. Vorzugsweise wird hierdurch eine Vorhersagefunktion ermöglicht, welche beispielsweise für einen bestimmten Dienst, etwa in Abhängigkeit von der Nutzungsdauer anfallende Kosten, die verbleibende Nutzungsdauer bzw. die verbleibende Datenmenge eines Datei-Downloads oder auch weitere Informationen angeben kann.
Vorzugsweise ist das erfindungsgemäße Verfahren so ausgestaltet, dass neue Vergebührungsparameter von der Gebührenanzeigesteuerungseinrichtung an das mobile Endgerät in vorbestimmten zeitlichen Abständen und/oder bei Eintreten vorbestimmter Ereignisse übertragen werden. Diese Ausführungsform ist bevorzugt, da sie beispielsweise bei Eintreten eines Tarifwechsels die Übertragung neuer Vergebührungsparameter an das mobile Endgerät ermöglicht. Die Übertragung der neuen Vergebührungsparameter kann dabei vorzugsweise im Rahmen bestehender Signalisierungsnachrichten oder beispielsweise auch mittels Kurznachrichten (Short Message Service, SMS) erfolgen.

In einer weiteren bevorzugten Ausführungsform läuft das erfindungsgemäße Verfahren so ab, dass neue Berechnungsroutinen von der Gebührenanzeigesteuerungseinrichtung an das mobile Endgerät bei Eintreten vorbestimmter Ereignisse übertragen werden. Dies ist vorteilhaft, da somit bei Bedarf auch während einer Dienstnutzung neue Berechnungsroutinen an das mobile Endgerät übertragen werden können.

Die Erfindung betrifft darüber hinaus ein mobiles Endgerät in einem Mobilfunknetz zum Anzeigen von Gebühren eines Dienstes.

Bezüglich des mobilen Endgerätes liegt der Erfindung die Aufgabe zugrunde, ein mobiles Endgerät anzugeben, welches eine flexible und leistungsfähige Anzeige von Gebühren eines Dienstes ermöglicht.

Diese Aufgabe wird erfindungsgemäß gelöst durch ein mobiles Endgerät in einem Mobilfunknetz zum Anzeigen von Gebühren eines Dienstes mit einer Empfangseinrichtung zum Empfangen von Vergebührungsparametern von einer Gebührenanzeigesteuerungseinrichtung des Mobilfunknetzes, einer Messeinrichtung zum Ermitteln von für die Vergebührung des Dienstes relevanten Messgrößen, einer Berechnungseinrichtung zum Berechnen der Gebühren unter Verwendung von mindestens einer von der Gebührenanzeigesteuerungseinrichtung ausgewählten Berechnungsroutine, der Vergebührungsparameter und der Messgrößen und einer Anzeigeeinrichtung zum Anzeigen der berechneten Gebühren.

Das erfindungsgemäße mobile Endgerät ist bevorzugt, da es eine Anzeige der berechneten Gebühren für unterschiedlichste Dienste mit unterschiedlichsten Vergebührungsmodellen ermöglicht. Dabei werden für die Vergebührung des Dienstes relevante Messgrößen von der Messeinrichtung ermittelt. Bei solchen für die Vergebührung des Dienstes relevanten Größen kann es sich beispielsweise um die zeitliche Dauer einer Verbindung, das übertragene und/oder empfangene Datenvolumen oder die Anzahl der auf dem mobilen Endgerät geladenen Dateien handeln.

In einer bevorzugten Ausführungsform ist das erfindungsgemäße mobile Endgerät derart ausgestaltet, dass die Empfangseinrichtung zum Empfangen der mindestens einen ausgewählten Berechnungsroutine von der Gebührenanzeigesteuerungseinrichtung ausgebildet ist. Dies bietet den Vorteil, dass für den jeweiligen Dienst benötigte Berechnungsroutinen von dem mobilen Endgerät empfangen und zur Berechnung der Gebühren verwendet werden können.

In einer bevorzugten Ausführungsform ist das erfindungsgemäße mobile Endgerät so ausgestaltet, dass die Empfangseinrichtung zum Empfangen von die mindestens eine ausgewählte Berechnungsroutine identifizierenden Informationen von der Gebührenanzeigesteuerungseinrichtung ausgebildet ist und das mobile Endgerät Mittel zum Prüfen der Verfügbarkeit der mindestens einen ausgewählten Berechnungsroutine auf dem mobilen Endgerät anhand der empfangenen Informationen und Mittel zum Anfordern mindestens einer auf dem mobilen Endgerät nicht verfügbaren ausgewählten Berechnungsroutine von der Gebührenanzeigesteuerungseinrichtung aufweist. Diese Ausführungsform des mobilen Endgerätes ist vorteilhaft, da sie eine unnötige Informationsübertragung von der Gebührenanzeigesteuerungseinrichtung an das mobile Endgerät vermeidet.

Vorzugsweise weist das erfindungsgemäße mobile Endgerät Mittel zum Übertragen eines die auf dem mobilen Endgerät verfügbaren Berechnungsroutinen kennzeichnenden Konfigurationscodes an die Gebührenanzeigesteuerungseinrichtung auf. Hierdurch kann das mobile Endgerät der Gebührenanzeigesteuerungseinrichtung vorteilhafterweise mitteilen, welche Berechnungsroutinen auf dem mobilen Endgerät verfügbar sind.

Das erfindungsgemäße mobile Endgerät kann vorzugsweise auch derart ausgestaltet sein, dass es Mittel zum Abgleichen der von dem mobilen Endgerät berechneten Gebühren mit von einer Vergebührungseinrichtung des Mobilfunknetzes berechneten Gebühren in vorbestimmten zeitlichen Abständen oder beim Eintreten vorbestimmter Ereignisse aufweist. Vorteilhafterweise wird hierdurch eine Synchronisierung der endgerätseitig und der netzseitig berechneten Gebühren ermöglicht.

In einer bevorzugten Ausführungsform weist das erfindungsgemäße mobile Endgerät eine Speichereinrichtung zum Speichern von das Anzeigen der Gebühren betreffenden Konfigurationsinformationen und eine mit der Speichereinrichtung verbundenen Verarbeitungseinrichtung zum Berücksichtigen der Konfigurationsinformationen beim Anzeigen der Gebühren auf. Hierdurch wird eine endgeräte- bzw. nutzerspezifische Konfiguration der Anzeige der Gebühren auf dem mobilen Endgerät ermöglicht. Vorzugsweise handelt es sich bei der Speichereinrichtung um eine Chip-Karte beispielsweise in Form einer SIM (Subscriber Identity Module)-Karte, welche mit dem restlichen mobilen Endgerät lösbar verbunden ist.

In einer weiteren bevorzugten Ausführungsform des erfindungsgemäßen mobilen Endgerätes ist die Empfangseinrichtung zum Empfangen der Konfigurationsinformationen von der Gebührenanzeigesteuerungseinrichtung ausgebildet. Hierdurch wird es vorteilhafterweise ermöglicht, dass die Konfigurationsinformationen von der Gebührenanzeigesteuerungseinrichtung an das mobile Endgerät übertragen und dort bei der Anzeige der Gebühren berücksichtigt werden können.

Vorzugsweise kann das erfindungsgemäße mobile Endgerät derart ausgestaltet sein, dass die Berechnungseinrichtung zum Berechnen der bei einer Nutzung des Dienstes voraussichtlich anfallenden Gebühren vor der Nutzung des Dienstes ausgebildet ist. Wie bereits im Zusammenhang mit dem erfindungsgemäßen Verfahren beschrieben, wird hierdurch eine Vorhersagefunktion auf dem mobilen Endgerät ermöglicht.

Vorteilhafterweise kann das erfindungsgemäße mobile Endgerät auch derart ausgeformt sein, dass die Empfangseinrichtung zum Empfangen von neuen Vergebührungsparametern von der Gebührenanzeigesteuerungseinrichtung in vorbestimmten zeitlichen Abständen oder beim Eintreten vorbestimmter Ereignisse ausgebildet ist. Diese Ausführungsform des erfindungsgemäßen mobilen Endgerätes ist bevorzugt, da sie eine dynamische Aktualisierung der zur Berechnung der Gebühren verwendeten Vergebührungsparameter möglich macht.

Das erfindungsgemäße mobile Endgerät kann auch derart ausgebildet sein, dass die Empfangseinrichtung zum Empfangen von neuen ausgewählten Berechnungsroutinen von der Gebührenanzeigesteuerungseinrichtung beim Eintreten vorbestimmter Ereignisse ausgebildet ist. Hierdurch wird es vorteilhafterweise ermöglicht, dass auch während der Nutzung eines Dienstes neue Berechnungsroutinen auf das mobile Endgerät geladen werden können.

Zur weiteren Erläuterung der Erfindung zeigt
- Figur 1: in einer schematischen Skizze den Nachrichtenfluss bei Ablauf eines Ausführungsbeispiels des erfindungsgemäßen Verfahrens und
- Figur 2: in einer schematischen Skizze ein Ausführungsbeispiel des erfindungsgemäßen mobilen Endgerätes zusammen mit einer Gebührenanzeigesteuerungseinrichtung.

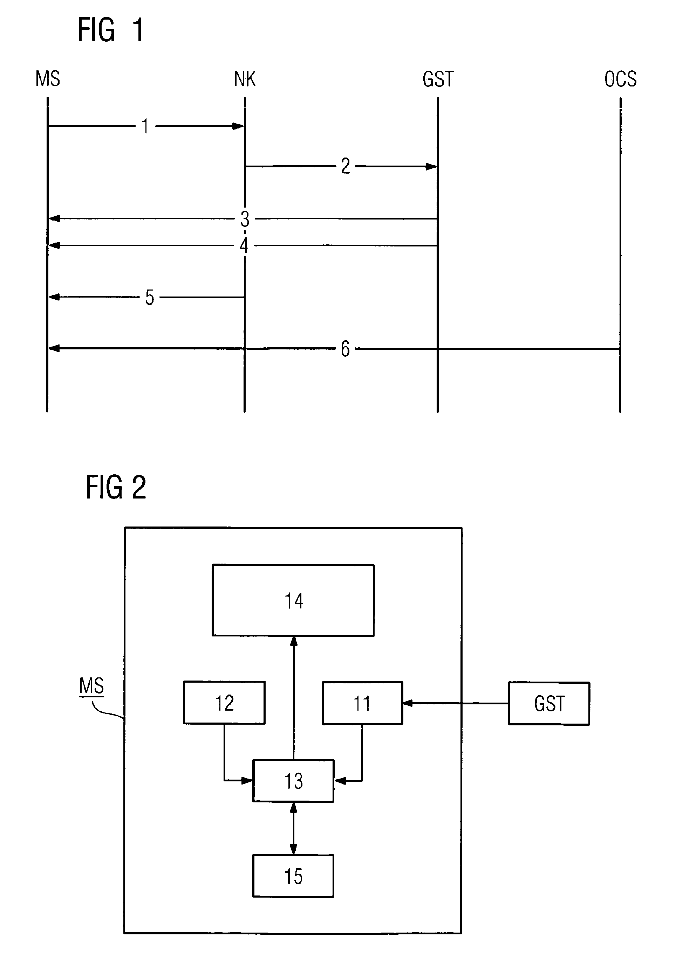

In Figur 1 sind mittels der vertikalen Striche verschiedene am Ablauf eines Ausführungsbeispiels des erfindungsgemäßen Verfahrens beteiligte Komponenten dargestellt. Neben einem mobilen Endgerät MS handelt es sich hierbei um einen Netzknoten NK eines von dem mobilen Endgerät MS genutzten Mobilfunknetzes, eine Gebührenanzeigesteuerungseinrichtung GST sowie eine Vergebührungseinrichtung OCS des Mobilfunknetzes. Die horizontalen Pfeile deuten einzelne Schritte beim Ablauf des Verfahrens an, wobei die Linie bei der Komponente beginnt, welche eine Nachricht sendet, und bei der Komponente endet, welche die betreffende Nachricht empfängt.

In dem dargestellten Ausführungsbeispiel fordert das mobile Endgerät MS in einer Signalisierungsnachricht 1 einen Dienst von dem Netzknoten NK des Mobilfunknetzes an. Um eine Anzeige von für die Nutzung des Dienstes anfallenden Gebühren auf dem mobilen Endgerät MS zu ermöglichen, sendet der Netzknoten NK daraufhin eine Signalisierungsnachricht 2 an die Gebührenanzeigesteuerungseinrichtung GST. Bei der Gebührenanzeigesteuerungseinrichtung GST in Figur 1 handelt es sich um eine zentrale Komponente des Mobilfunknetzes. Alternativ hierzu könnte sie beispielsweise auch als Bestandteil des Netzknotens NK oder auch der Vergebührungseinrichtung OCS realisiert werden. Bei dem Netzknoten NK kann es sich beispielsweise für den Fall, dass ein Mobilfunknetz nach dem GPRS (General Paket Radio Service)-Standard vorliegt, um einen Serving GPRS Support Node (SGSN) handeln.

In Ansprechen auf die empfangene Signalisierungsnachricht 2 wählt die Gebührenanzeigesteuerungseinrichtung GST mindestens eine für die Berechnung der Gebühren des von dem mobilen Endgerät MS angeforderten Dienstes zu verwendende Berechnungsroutine aus. Bei den Berechnungsroutinen handelt es sich vorzugsweise um einfache Software-Komponenten, welche aufgrund ihrer Kombinierbarkeit eine hohe Flexibilität hinsichtlich der Berechnung der Gebühren ermöglichen.

Die Gebührenanzeigesteuerungseinrichtung GST überträgt in Verfahrensschritt 3 für die mindestens eine ausgewählte Berechnungsroutine benötigte Vergebührungsparameter an das mobile Endgerät MS. Bei den Vergebührungsparametern kann es sich beispielsweise um die Länge der für die Vergebührung zu verwendenden Zeitintervalle, die Gebühren pro Zeitintervall, die Größe der Datenvolumenblöcke, die Gebühren pro Datenvolumenblock, den Preis für das Herunterladen einer einzelnen Datei, wie beispielsweise eines Musikstücks, eines Klingeltons oder eines Spiels, oder beliebige weitere vergebührungsrelevante Parameter handeln. Bei solchen weiteren vergebührungsrelevanten Parametern kann es sich beispielsweise um Informationen dazu handeln, wie zu vergebührende Ereignisse (z. B. Versand einer MMS (Multimedia Messaging Service)-Nachricht, Empfang/Versenden von SIP (Session Initiation Protocol)-Nachrichten) von dem mobilen Endgerät MS erkannt werden können.

In dem in Figur 1 dargestellten Ausführungsbeispiel überträgt die Gebührenanzeigesteuerungseinrichtung GST zusätzlich in einer Signalisierungsnachricht 4 die ausgewählte Berechnungsroutine oder mindestens eine der ausgewählten Berechnungsroutinen von der Gebührenanzeigesteuerungseinrichtung GST an das mobile Endgerät MS. Zur besseren Veranschaulichung sind dabei in Figur 1 die Verfahrensschritte 3 und 4 als separate Verfahrensschritte dargestellt. Die Übertragung der ausgewählten Berechnungsroutine bzw. mindestens einer der ausgewählten Berechnungsroutinen sowie der für die mindestens eine ausgewählte Berechnungsroutine benötigten Vergebührungsparameter von der Gebührenanzeigesteuerungseinrichtung GST an das mobile Endgerät MS kann jedoch vorzugsweise auch in einem gemeinsamen Verfahrensschritt erfolgen. Dies bietet den Vorteil, dass die Anzahl der Signalisierungsnachrichten begrenzt wird, wodurch unnötige Netzlast vermieden wird.

Hinsichtlich der Übertragung der mindestens einen ausgewählten Berechnungsroutine in Verfahrensschritt 4 von der Gebührenanzeigesteuerungseinrichtung GST an das mobile Endgerät MS sind mehrere unterschiedliche Abläufe möglich. So kann die Gebührenanzeigesteuerungseinrichtung GST einerseits alle für die Berechnung und Anzeige der Gebühren des Dienstes erforderlichen, d. h. ausgewählten, Berechnungsroutinen an das mobile Endgerät MS übertragen unabhängig davon, ob diese Berechnungsroutinen möglicherweise bereits vollständig oder teilweise auf dem mobilen Endgerät MS verfügbar sind. In diesem Fall erfolgt das Übertragen der mindestens einen ausgewählten Berechnungsroutine unmittelbar in Antwort auf das Anfordern des Dienstes, d. h. eine Selektion dahingehend, dass in Verfahrensschritt 4 lediglich die auf dem mobilen Endgerät MS nicht verfügbaren Berechnungsroutinen übermittelt werden, findet nicht statt.

Andererseits ist auch die Ausführungsform möglich, dass die Gebührenanzeigesteuerungseinrichtung GST anhand eines endgeräte- bzw. nutzerspezifischen Datenbankeintrages die Verfügbarkeit der mindestens einen ausgewählten Berechnungsroutine auf dem mobilen Endgerät MS prüft und mindestens eine auf dem mobilen Endgerät MS nicht verfügbare ausgewählte Berechnungsroutine an das mobile Endgerät MS überträgt. Hierdurch wird vorteilhafterweise erreicht, dass ausschließlich auf dem mobilen Endgerät MS nicht verfügbare ausgewählte Berechnungsroutinen von der Gebührenanzeigesteuerungseinrichtung GST an das mobile Endgerät MS übertragen werden. Die endgeräte- bzw. nutzerspezifischen Datenbankeinträge können in einer der Gebührenanzeigesteuerungseinrichtung GST zugeordneten spezifischen Datenbank abgelegt sein, oder aber zusammen mit weiteren endgeräte- bzw. nutzerspezifischen Daten etwa in einer Heimatdatenbank des Mobilfunknetzes abgelegt sein.

Alternativ kann die Gebührenanzeigesteuerungseinrichtung GST beispielsweise zusammen mit der Übertragung der für die mindestens eine ausgewählte Berechnungsroutine benötigten Vergebührungsparameter in Verfahrensschritt 3 die mindestens eine ausgewählte Berechnungsroutine identifizierende Informationen an das mobile Endgerät MS senden. Das mobile Endgerät MS prüft anhand der empfangenen Informationen die Verfügbarkeit der mindestens einen ausgewählten Berechnungsroutine auf dem mobilen Endgerät MS und fordert auf dem mobilen Endgerät MS nicht verfügbare ausgewählte Berechnungsroutinen von der Gebührenanzeigesteuerungseinrichtung GST an. Dies kann beispielsweise in einem in Figur 1 nicht dargestellten Verfahrensschritt erfolgen, der zwischen den Verfahrensschritten 3 und 4 angeordnet ist. Als Ergebnis wird wiederum in Verfahrensschritt 4 mindestens eine auf dem mobilen Endgerät MS nicht verfügbare ausgewählte Berechnungsroutine von der Gebührenanzeigesteuerungseinrichtung GST an das mobile Endgerät MS übertragen.

Des Weiteren ist es alternativ auch möglich, dass ein die auf dem mobilen Endgerät MS verfügbaren Berechnungsroutinen kennzeichnender Konfigurationscode von dem mobilen Endgerät MS an die Gebührenanzeigesteuerungseinrichtung GST übertragen wird. Dabei kann der Konfigurationscode beispielsweise in Verfahrensschritt 1 von dem mobilen Endgerät MS an den Netzknoten NK übertragen werden, welcher den Konfigurationscode in Verfahrensschritt 2 an die Gebührenanzeigesteuerungseinrichtung GST weiterleiten kann. Basierend auf dem empfangenen Konfigurationscode kann die Gebührenanzeigesteuerungseinrichtung GST mindestens eine auf dem mobilen Endgerät MS nicht verfügbare ausgewählte Berechnungsroutine an das mobile Endgerät MS übertragen. Dies geschieht wiederum in Verfahrensschritt 4, der, wie bereits erläutert, mit Verfahrensschritt 3 kombiniert sein kann.

In dem in Figur 1 dargestellten Ausführungsbeispiel bestätigt der Netzknoten NK die erfolgreiche Anforderung des Dienstes mittels einer Bestätigungsnachricht 5 an das mobile Endgerät MS. Damit ist der Aufbau des Dienstes abgeschlossen. Generell sei darauf hingewiesen, dass in Figur 1 lediglich die für die Erläuterung des Verfahrens relevanten Nachrichten bzw. Verfahrensschritte dargestellt sind.

Während der Nutzung des Dienstes ermittelt das mobile Endgerät MS nun für die Vergebührung des Dienstes relevante Messgrößen. Bei diesen Messgrößen kann es sich beispielsweise um die Gesprächsdauer, das empfangene und/oder gesendete Datenvolumen oder die Anzahl der geladenen Dateien handeln. Basierend auf den ermittelten Messgrößen, der ausgewählten Berechnungsroutine bzw. den ausgewählten Berechnungsroutinen sowie den Vergebührungsparametern berechnet das mobile Endgerät MS die im Rahmen der Nutzung des Dienstes anfallenden Gebühren. Dabei können auch die Gebühren für mehrere durch das mobile Endgerät MS gleichzeitig genutzte Dienste zur gleichen Zeit berechnet und gegebenenfalls summarisch auf dem mobilen Endgerät MS angezeigt werden. Um festzulegen, in welcher Form das Anzeigen der Gebühren auf dem mobilen Endgerät MS erfolgen soll, können das Anzeigen der Gebühren betreffende Konfigurationsinformationen in einer an das mobile Endgerät MS angebundenen Speichereinrichtung gespeichert und beim Anzeigen der Gebühren berücksichtigt werden. Bei der Speichereinrichtung kann es sich sowohl um einen festen Bestandteil des mobilen Endgerätes MS handeln, als auch um eine lösbar mit dem restlichen mobilen Endgerät MS verbundene Chip-Karte beispielsweise in Form einer so genannten SIM (Subscriber Identity Module)-Karte. Im Rahmen der Beschreibung der vorliegenden Erfindung wird dabei im Allgemeinen die Einheit bestehend aus der eigentlichen mobilen Kommunikationseinheit sowie der zur Personalisierung verwendeten Chip-Karte als mobiles Endgerät MS bezeichnet. Es sei jedoch darauf hingewiesen, dass das erfindungsgemäße Verfahren auch für solche mobilen Endgeräte MS anwendbar ist, welche keine entsprechende Chip-Karte aufweisen. In diesem Fall kann die Speicherung der Konfigurationsinformationen in einer Speichereinrichtung erfolgen, welche fest mit den restlichen Bestandteilen des mobilen Endgerätes MS verbunden ist.

Neben der Festlegung, ob bei gleichzeitigem Ablauf mehrerer Dienste auf dem mobilen Endgerät MS die Anzeige der Gebühren auf dem mobilen Endgerät MS separat oder gemeinsam für die Dienste erfolgen soll, können die Konfigurationsinformationen weiterhin dafür verwendet werden, die Häufigkeit und die Art der Anzeige der Gebühren auf dem mobilen Endgerät MS festzulegen. So kann beispielsweise bestimmt werden, ob das Anzeigen der Gebühren in regelmäßigen zeitlichen Abständen, bei Erreichen bestimmter Schwellwerte oder aber einmalig nach Beendigung des Dienstes erfolgen soll.

Alternativ können die Konfigurationsinformationen auch in einer an die Gebührenanzeigesteuerungseinrichtung GST angebundenen Speichereinrichtung gespeichert werden. In diesem Fall erfolgt eine Übertragung der Konfigurationsinformationen an das mobile Endgerät MS, wodurch das mobile Endgerät MS wiederum in die Lage versetzt wird, die Konfigurationsinformationen beim Anzeigen der Gebühren zu berücksichtigen. Generell kann es sich bei den Konfigurationsinformationen um für das mobile Endgerät MS und/oder den Nutzer des mobilen Endgerätes MS und/oder den angeforderten Dienst spezifische Informationen handeln.

Neben der Berechnung und Anzeige der Gebühren während der Nutzung des Dienstes ist es auch möglich, dass die Berechnung und Anzeige der bei einer Nutzung des Dienstes voraussichtlich anfallenden Gebühren auf dem mobilen Endgerät MS bereits vor der eigentlichen Nutzung des Dienstes erfolgt. Hierdurch wird die Kostentransparenz für den Nutzer des mobilen Endgerätes MS weiter erhöht, da ihm die Information über die bei einer Nutzung des Dienstes voraussichtlich anfallenden Gebühren bereits angezeigt wird, bevor diese Gebühren tatsächlich angefallen sind. Hierdurch wird es dem Nutzer des mobilen Endgerätes MS ermöglicht, seine Entscheidung zur Nutzung des Dienstes zu überdenken. Dies kann bei aus Sicht des Nutzers hohen Gebühren dazu führen, dass eine Nutzung des Dienstes unterbleibt. Alternativ ist es jedoch auch möglich, dass die Gebühren aus Sicht des Nutzers geringer sind als erwartet und der angeforderte Dienst somit in größeren Umfang als ursprünglich geplant genutzt wird.

Sowohl hinsichtlich der in Verfahrensschritt 3 an das mobile Endgerät MS übertragenen Vergebührungsparameter als auch hinsichtlich der in Verfahrensschritt 4 an das mobile Endgerät MS übertragenen mindestens einen ausgewählten Berechnungsroutine sind Aktualisierungen während der Nutzung des Dienstes möglich. So kann beispielsweise ein zeitlich bedingter Tarifwechsel die Übertragung neuer Vergebührungsparameter von der Gebührenanzeigesteuerungseinrichtung GST an das mobile Endgerät MS erforderlich machen, um weiterhin eine korrekte Anzeige der Gebühren auf dem mobilen Endgerät MS zu ermöglichen.

In Verfahrensschritt 6 erfolgt eine Übertragung der von der Vergebührungseinrichtung OCS berechneten Gebühren an das mobile Endgerät MS. Hierdurch wird dem mobilen Endgerät MS ein Abgleich der von ihm selbst berechneten Gebühren mit dem von der Vergebührungseinrichtung OCS berechneten Gebühren ermöglicht. Bei etwaigen Abweichungen kann somit eine entsprechende Korrektur der auf dem mobilen Endgerät MS angezeigten Gebühren erfolgen. Die Übertragung der von der Vergebührungseinrichtung OCS berechneten Gebühren an das mobile Endgerät MS kann in vorbestimmten zeitlichen Abständen oder beim Eintreten vorbestimmter Ereignisse wie etwa der Übertragung neuer Vergebührungsparameter erfolgen. Es sei darauf hingewiesen, dass die Übertragung der von der Vergebührungseinrichtung OCS berechneten Gebühren auch über die Gebührenanzeigesteuerungseinrichtung GST erfolgen kann. In diesem Fall empfängt die Gebührenanzeigesteuerungseinrichtung GST, welche auch ein Bestandteil der Vergebührungseinrichtung OCS sein kann, die von der Vergebührungseinrichtung OCS berechneten Gebühren und überträgt diese weiter an das mobile Endgerät MS.
Figur 2 zeigt in einer schematischen Darstellung ein Ausführungsbeispiel des erfindungsgemäßen mobilen Endgerätes MS. Darüber hinaus ist zur besseren Veranschaulichung eine Gebührenanzeigesteuerungseinrichtung GST dargestellt. Das mobile Endgerät MS verfügt über eine Empfangseinrichtung 11 zum Empfangen von Vergebührungsparametern von der Gebührenanzeigesteuerungseinrichtung GST des Mobilfunknetzes. Darüber hinaus weist das mobile Endgerät MS eine Messeinrichtung 12 zum Ermitteln von für die Vergebührung des Dienstes relevanten Messgrößen auf. In dem dargestellten Ausführungsbeispiel sind sowohl die Empfangseinrichtung 11 als auch die Messeinrichtung 12 mit einer Berechnungseinrichtung 13 zum Berechnen der Gebühren unter Verwendung von mindestens einer von der Gebührenanzeigesteuerungseinrichtung GST ausgewählten Berechnungsroutine, der Vergebührungsparameter und der Messgrößen verbunden. Mittels einer mit der Berechnungseinrichtung 13 verbundenen Anzeigeeinrichtung 14 kann eine Anzeige der derart berechneten Gebühren erfolgen.

Das mobile Endgerät MS weist darüber hinaus eine Speichereinrichtung 15 auf, in der Berechnungsroutinen abgelegt werden können. Dies bietet den Vorteil, dass bei erneuter Verwendung der Berechnungsroutinen keine erneute Übertragung der betreffenden Berechnungsroutine von Gebührenanzeigesteuerungseinrichtung GST an das mobile Endgerät MS erforderlich ist. Darüber hinaus können in der Speichereinrichtung 15 beispielsweise auch von der Gebührenanzeigesteuerungseinrichtung GST empfangene Vergebührungsparameter sowie das Anzeigen der Gebühren betreffende Konfigurationsinformationen gespeichert werden.

## Patentansprüche

1. Verfahren zum Anzeigen von Gebühren auf einem mobilen Endgerät (MS) eines Mobilfunknetzes mit den folgenden Schritten:
- Auswählen mindestens einer für die Berechnung der Gebühren eines von dem mobilen Endgerät (MS) angeforderten Dienstes zu verwendenden Berechnungsroutine durch eine Gebührenanzeigesteuerungseinrichtung (GST) des Mobilfunknetzes,
- Übertragen (3) von für die mindestens eine ausgewählte Berechnungsroutine benötigten Vergebührungsparametern von der Gebührenanzeigesteuerungseinrichtung (GST) an das mobile Endgerät (MS),
- Ermitteln von für die Vergebührung des Dienstes relevanten Messgrößen durch das mobile Endgerät (MS),
- Berechnen der Gebühren durch das mobile Endgerät (MS) unter Verwendung der mindestens einen ausgewählten Berechnungsroutine, der Vergebührungsparameter und der Messgrößen und
- Anzeigen der berechneten Gebühren auf dem mobilen Endgerät (MS).

2. Verfahren nach Anspruch 1,
**gekennzeichnet durch**
Übertragen (4) der ausgewählten Berechnungsroutine oder mindestens einer der ausgewählten Berechnungsroutinen von der Gebührenanzeigesteuerungseinrichtung (GST) an das mobile Endgerät (MS).

3. Verfahren nach Anspruch 2,
**gekennzeichnet durch**
das Übertragen (4) unmittelbar in Antwort auf das Anfordern (1) des Dienstes erfolgt.

4. Verfahren nach Anspruch 2,
**gekennzeichnet durch**
- Prüfen der Verfügbarkeit der mindestens einen ausgewählten Berechnungsroutine auf dem mobilen Endgerät (MS) **durch** die Gebührenanzeigesteuerungseinrichtung (GST) anhand eines endgeräte- bzw. nutzerspezifischen Datenbankeintrages und
- Übertragen (4) mindestens einer auf dem mobilen Endgerät (MS) nicht verfügbaren ausgewählten Berechnungsroutine von der Gebührenanzeigesteuerungseinrichtung (GST) an das mobile Endgerät (MS).

5. Verfahren nach Anspruch 2,
**gekennzeichnet durch**
- Senden von die mindestens eine ausgewählte Berechnungsroutine identifizierende Informationen von der Gebührenanzeigesteuerungseinrichtung (GST) an das mobile Endgerät (MS),
- Prüfen der Verfügbarkeit der mindestens einen ausgewählten Berechnungsroutine auf dem mobilen Endgerät (MS) **durch** das mobile Endgerät (MS) anhand der empfangenen Informationen,
- Anfordern mindestens einer auf dem mobilen Endgerät (MS) nicht verfügbaren ausgewählten Berechnungsroutine von der Gebührenanzeigesteuerungseinrichtung (GST) **durch** das mobile Endgerät (MS) und
- Übertragen (4) der mindestens einen auf dem mobilen Endgerät (MS) nicht verfügbaren ausgewählten Berechnungsroutine von der Gebührenanzeigesteuerungseinrichtung (GST) an das mobile Endgerät (MS).

6. Verfahren nach Anspruch 2,
**gekennzeichnet durch**
- Übertragen eines die auf dem mobilen Endgerät (MS) verfügbaren Berechnungsroutinen kennzeichnenden Konfigurationscodes von dem mobilen Endgerät (MS) an die Gebührenanzeigesteuerungseinrichtung (GST) und
- Übertragen (4) mindestens einer auf dem mobilen Endgerät (MS) nicht verfügbaren ausgewählten Berechnungsroutine von der Gebührenanzeigesteuerungseinrichtung (GST) an das mobile Endgerät (MS).

7. Verfahren nach einem der vorhergehenden Ansprüche, **gekennzeichnet durch**
Abgleichen der von dem mobilen Endgerät (MS) berechneten Gebühren mit von einer Vergebührungseinrichtung (OCS) des Mobilfunknetzes berechneten Gebühren in vorbestimmten zeitlichen Abständen oder beim Eintreten vorbestimmter Ereignisse.

8. Verfahren nach Anspruch 7,
**dadurch gekennzeichnet , dass**
das Abgleichen durch Übertragen (6) der von der Vergebührungseinrichtung (OCS) berechneten Gebühren an das mobile Endgerät (MS) erfolgt.

9. Verfahren nach einem der vorhergehenden Ansprüche, **gekennzeichnet durch**
Vorhalten der für die Berechnung der Gebühren benötigten Berechnungsroutinen in einer an die Gebührenanzeigesteuerungseinrichtung (GST) angebundenen Speichereinrichtung.

10. Verfahren nach einem der vorhergehenden Ansprüche, **gekennzeichnet durch**
- Speichern von das Anzeigen der Gebühren betreffenden Konfigurationsinformationen in einer an das mobile Endgerät (MS) angebundenen Speichereinrichtung und
- Berücksichtigen der Konfigurationsinformationen beim Anzeigen der Gebühren.

11. Verfahren nach einem der Ansprüche 1 bis 9,
**gekennzeichnet durch**
- Speichern von das Anzeigen der Gebühren betreffenden Konfigurationsinformationen in einer an die Gebührenanzeigesteuerungseinrichtung (GST) angebundenen Speichereinheit,
- Übertragen der Konfigurationsinformationen an das mobile Endgerät (MS) und
- Berücksichtigen der Konfigurationsinformationen beim Anzeigen der Gebühren.

12. Verfahren nach einem der Ansprüche 10 oder 11,
**gekennzeichnet durch**
Verwenden von für das mobile Endgerät (MS) und/oder den Nutzer des mobilen Endgerätes (MS) und/oder den angeforderten Dienst spezifischen Konfigurationsinformationen.

13. Verfahren nach einem der vorhergehenden Ansprüche,
**gekennzeichnet durch**
Berechnen und Anzeigen der bei einer Nutzung des Dienstes voraussichtlich anfallenden Gebühren auf dem mobilen Endgerät (MS) vor der Nutzung des Dienstes.

14. Verfahren nach einem der vorhergehenden Ansprüche,
**gekennzeichnet durch**
Übertragen von neuen Vergebührungsparametern von der Gebührenanzeigesteuerungseinrichtung (GST) an das mobile Endgerät (MS) in vorbestimmten zeitlichen Abständen und/oder bei Eintreten vorbestimmter Ereignisse.

15. Verfahren nach einem der vorhergehenden Ansprüche,
**gekennzeichnet durch**
Übertragen von neuen Berechnungsroutinen von der Gebührenanzeigesteuerungseinrichtung (GST) an das mobile Endgerät (MS) bei Eintreten vorbestimmter Ereignisse.

16. Mobiles Endgerät (MS) in einem Mobilfunknetz zum Anzeigen von Gebühren eines Dienstes mit
- einer Empfangseinrichtung (11) zum Empfangen von Vergebührungsparametern von einer Gebührenanzeigesteuerungseinrichtung (GST) des Mobilfunknetzes,
- einer Messeinrichtung (12) zum Ermitteln von für die Vergebührung des Dienstes relevanten Messgrößen,
- einer Berechnungseinrichtung (13) zum Berechnen der Gebühren unter Verwendung von mindestens einer von der Gebührenanzeigesteuerungseinrichtung (GST) ausgewählten Berechnungsroutine, der Vergebührungsparameter und der Messgrößen und
- einer Anzeigeeinrichtung (14) zum Anzeigen der berechneten Gebühren.

17. Mobiles Endgerät nach Anspruch 16,
**dadurch gekennzeichnet , dass**
die Empfangseinrichtung (11) zum Empfangen der mindestens einen ausgewählten Berechnungsroutine von der Gebührenanzeigesteuerungseinrichtung (GST) ausgebildet ist.

18. Mobiles Endgerät nach Anspruch 17,
**dadurch gekennzeichnet , dass**
- die Empfangseinrichtung (11) zum Empfangen von die mindestens eine ausgewählte Berechnungsroutine identifizierenden Informationen von der Gebührenanzeigesteuerungseinrichtung (GST) ausgebildet ist und das mobile Endgerät (MS)
- Mittel zum Prüfen der Verfügbarkeit der mindestens einen ausgewählten Berechnungsroutine auf dem mobilen Endgerät (MS) anhand der empfangenen Informationen und
- Mittel zum Anfordern mindestens einer auf dem mobilen Endgerät (MS) nicht verfügbaren ausgewählten Berechnungsroutine von der Gebührenanzeigesteuerungseinrichtung (GST) aufweist.

19. Mobiles Endgerät nach Anspruch 17,
**gekennzeichnet durch**
Mittel zum Übertragen eines die auf dem mobilen Endgerät (MS) verfügbaren Berechnungsroutinen kennzeichnenden Konfigurationscodes an die Gebührenanzeigesteuerungseinrichtung (GST).

20. Mobiles Endgerät nach einem der Ansprüche 16 bis 19, **gekennzeichnet durch**
Mittel zum Abgleichen der von dem mobilen Endgerät (MS) berechneten Gebühren mit von einer Vergebührungseinrichtung des Mobilfunknetzes berechneten Gebühren in vorbestimmten zeitlichen Abständen oder beim Eintreten vorbestimmter Ereignisse.

21. Mobiles Endgerät nach einem der Ansprüche 16 bis 20, **gekennzeichnet durch**
- eine Speichereinrichtung (15) zum Speichern von das Anzeigen der Gebühren betreffenden Konfigurationsinformationen und
- einer mit der Speichereinrichtung (15) verbundenen Verarbeitungseinrichtung zum Berücksichtigen der Konfigurationsinformationen beim Anzeigen der Gebühren.

22. Mobiles Endgerät nach einem der Ansprüche 16 bis 20,
**dadurch gekennzeichnet , dass**
die Empfangseinrichtung (11) zum Empfangen der Konfigurationsinformationen von der Gebührenanzeigesteuerungseinrichtung (GST) ausgebildet ist.

23. Mobiles Endgerät nach einem der Ansprüche 16 bis 22,
**dadurch gekennzeichnet , dass**
die Berechnungseinrichtung (13) zum Berechnen der bei einer Nutzung des Dienstes voraussichtlich anfallenden Gebühren vor der Nutzung des Dienstes ausgebildet ist.

24. Mobiles Endgerät nach einem der Ansprüche 16 bis 23,
**dadurch gekennzeichnet , dass**
die Empfangseinrichtung (11) zum Empfangen von neuen Vergebührungsparametern von der Gebührenanzeigesteuerungseinrichtung (GST) in vorbestimmten zeitlichen Abständen oder beim Eintreten vorbestimmter Ereignisse ausgebildet ist.

25. Mobiles Endgerät nach einem der Ansprüche 16 bis 24,
**dadurch gekennzeichnet , dass**
die Empfangseinrichtung (11) zum Empfangen von neuen ausgewählten Berechnungsroutinen von der Gebührenanzeigesteuerungseinrichtung (GST) beim Eintreten vorbestimmter Ereignisse ausgebildet ist.
